# FASCICULE DE BREVET EUROPEEN

(11) **EP 1 059 787 B1**
(45) Date de publication et mention de la délivrance du brevet: **20.09.2006**
(21) Numéro de dépôt: 00401589.7
(22) Date de dépôt: 06.06.2000
(51) Int. Cl.: H04L 27/26, H04L 1/00

(54) **Système paramètrable à entrelacement temporel et fréquentiel pour la transmission de données numériques entre stations fixes ou mobiles**
Parametrisierbares Zeit- und Frequenzverschachtelungssystem für digitale Datenübertragung zwischen festen oder mobilen Stationen
Parameter-adjustable time- and frequency interleaving system for digital data transmission between fixed or mobile stations

(30) Priorité: 08.06.1999 FR 9907185
(43) Date de publication de la demande: 13.12.2000
(73) Titulaire: SAGEM Défense Sécurité, 75015 Paris (FR)
(72) Inventeur: Combes, Bernard, c/o SAGEM SA, 95610 Eragny (FR); Paqueron, Pascal, c/o SAGEM SA, 95610 Eragny (FR); Voillequin, Cyril, c/o SAGEM SA, 95610 Eragny (FR); Lemahieu, Pierre, c/o SAGEM SA, 95610 Eragny (FR)
(74) Mandataire: Loisel, Bertrand

(56) Documents cités:
- EP-A- 0 565 470
- EP-A- 0 903 883
- FR-A- 2 729 030
- WU Y ET AL: "INTERLEAVING OR SPECTRUM-SPREADING IN DIGITAL RADIO INTENDED FOR VEHICLES" EBU REVIEW TECHNICAL,CH,EUROPEAN BROADCASTING UNION, GENEVA, juin 1986 (1986-06), pages 128-142, XP000783803 ISSN: 1018-7391

## Description

La présente invention concerne les systèmes de transmission de données d'entrée sous forme numérique représentant des paramètres quelconques qui peuvent notamment être le son et/ou l'image, vers et à partir des mobiles, ainsi que les émetteurs et récepteurs qui font partie d'un tel système.

La mention «vers et à partir des mobiles» doit être interprétée comme signifiant que le système permet de tolérer les contraintes particulières à ce cas, en restant parfaitement adapté à la transmission lorsque l'émetteur et le récepteur sont fixes.

La transmission et la diffusion de données par voie radioélectrique se heurtent à des perturbations d'origine et de caractéristiques très diverses. L'affaiblissement du signal reçu augmente avec la distance et la présence d'obstacles, et peut réduire la puissance à la réception à une valeur comparable à celle des perturbations. Les échos multiples, qui peuvent être très nombreux en milieu urbain et peuvent conduire à des retards de transmission très élevés en milieu ouvert, provoquent des interférences entre symboles successifs. Certains parasites industriels sont permanents, mais ils sont généralement concentrés en fréquence. D'autres perturbations, de durée très brève, peuvent au contraire avoir un spectre de fréquences étendu. Enfin, dans un contexte de transmission entre un émetteur et/ou un récepteur mobiles, le canal de transmission peut varier de façon non négligeable au cours du temps (en termes de niveaux d'échos, d'affaiblissement du signal, etc.), et ce d'autant plus rapidement que la vitesse de déplacement est élevée.

Avant même que ne soit envisagée une transmission ou une diffusion vers ou à partir de mobiles, on a conçu des procédés et des systèmes augmentant l'immunité au brouillage. Le brevet US 3 988 677 propose un système mettant en oeuvre un codage Reed Solomon concaténé, associé à un codage convolutionnel et à un entrelacement temporel. Puis, cette fois en vue de la diffusion sonore vers les mobiles, l'article de D. Pommier et al. "Interleaving or spectrum-spreading in digital radio intended for vehicles", EBU Review, Technical n° 217, juin 1986, propose d'associer l'entrelacement fréquentiel à l'entrelacement temporel avec une modulation multi-porteuses dite COFDM (Coded Orthogonal Frequency Division Multiplex). Cette approche a été retenue dans la norme, dite DAB, de diffusion sonore vers les mobiles. Suite à l'utilisation d'une faible bande passante (1.5 MHz) et d'une modulation à faible nombre d'états (MDP4), elle n'autorise qu'un débit limité. La norme de diffusion DVB-T quant à elle, utilise également les principes du COFDM, avec cette fois une bande passante plus large (8MHz) et une modulation à plus grand nombre d'états (64 QAM), qui autorise ainsi des débits plus élevés. Par contre, cette norme vise clairement une utilisation sur des émetteurs et récepteurs fixes, puisqu'elle ne définit pas d'entrelacement temporel, et qu'elle utilise un nombre de porteuses élevé en regard à la bande passante (1704 porteuses au minimum pour une bande passante de 8MHz).
EP0565470 divulgue un système utilisant de tels principes.
EP0903883 divulgue un système pour modifier de façon adaptative les schémas de codage et de modulation dans un système de radiocommunication. Ce système repose sur une analyse du canal de transmission et détermine le codage et la modulation à appliquer en fonction d'informations de contre-réaction transmises entre différents modules du système. Un tel système qui fonctionne de façon complètement autonome est relativement complexe.

La présente invention consiste en un système de transmission de données numériques adaptable à des conditions de propagation très diverses, grâce à la possibilité de paramétrage de ses caractéristiques. Elle trouve une application particulièrement importante, bien que non exclusive, dans la transmission de données vidéo à partir d'un véhicule de reportage ou de télémesures à partir d'un véhicule d'essais.

Pour un véhicule de reportage par exemple, l'environnement peut changer d'une mission à la suivante, et en particulier le nombre et le retard des trajets multiples peut changer considérablement. L'émetteur peut aussi être placé à poste fixe ou être porté sur des véhicules ayant des vitesses très variables, se traduisant par des effets et étalements Doppler également très variables. La présente invention permet de configurer l'émetteur et le récepteur de façon à utiliser à chaque fois un signal de transmission adapté aux différents types de conditions de transmission.

La présente invention permet également de transmettre des données à haut débit (bien supérieur à ce que définit la norme DAB) dans un contexte où l'émetteur et/ou le récepteur sont mobiles. Cette capacité de fonctionnement à haut-débit en environnement mobile est assurée par un entrelacement temporel d'une part, et par l'utilisation possible d'un faible nombre de porteuses relatif à la bande passante d'autre part. L'entrelacement temporel permet de combattre les diverses perturbations que la transmission peut rencontrer de façon ponctuelle (suite à un changement d'environnement temporaire créé par le mouvement de l'émetteur et/ou du récepteur). La possibilité d'utiliser un faible nombre de porteuses, qui implique un débit de modulation élevé sur chacune d'entre elle, permet de lutter contre les variations rapides du canal au cours du temps (étalement Doppler).

L'invention propose dans ces buts un émetteur pour un système de transmission radiofréquence, conforme à la revendication 1.

Le terme "module" doit être interprété comme désignant un composant matériel ou logiciel permettant de remplir la fonction désignée ; dans la pratique, beaucoup des modules pourront être regroupés sous forme d'un circuit intégré d'application spécifique ou ASIC.

Chaque jeu de paramètres est défini par une combinaison particulière des paramètres constitués par le rendement de codage, la profondeur d'entrelacement temporel, le nombre de porteuses, leur type de modulation, et la longueur des éventuels intervalles de garde. Dans un mode de réalisation, chaque jeu de paramètres fait intervenir des valeurs différentes de l'ensemble. Dans un autre mode de réalisation, certains des paramètres sont fixes ou réglables indépendamment des autres, les jeux sélectionnables portant sur des couples ou des triplés de paramètres.

Avant toute mission, il est ainsi possible à l'opérateur de sélectionner un jeu de paramètres approprié à la nature du canal de transmission, connue a priori. Par exemple, il sera préférable d'adopter un nombre élevé de porteuses pour diminuer le débit sur chaque porteuse et d'allonger les intervalles de garde en présence de trajets nombreux. En revanche, ce choix sera évité lorsque l'émetteur est porté sur un véhicule en déplacement rapide tel qu'un hélicoptère, étant donnée l'existence possible d'un étalement Doppler et son effet défavorable sur des symboles trop longs. On préfèrera alors utiliser un faible nombre de porteuses, correspondant à un temps symbole court, qui sera ainsi moins sensible aux variations temporelles rapides du canal de transmission.

Suivant un autre aspect de l'invention, le nombre de porteuses émises en parallèle et la largeur de bande utilisée sont telles que de hauts débits de transmission (supérieur à ce que définit la norme DAB) sont possibles avec un émetteur et/ou un récepteur mobiles, dans la mesure où le débit sur chaque porteuse émise est suffisamment élevé pour combattre efficacement l'étalement Doppler.

L'émetteur est avantageusement complété par un module d'insertion de symboles d'analyse, dont des exemples seront donnés plus loin et qui sont destinés à être exploités par le récepteur.

Le flux numérique obtenu est appliqué à un convertisseur numérique/analogique suivi de moyens de transposition à la fréquence d'émission.

Dans un système, le récepteur accomplit les opérations duales de l'émetteur et comporte lui aussi une interface permettant de sélectionner les valeurs des paramètres de façon qu'elles correspondent aux paramètres de l'émetteur, transmis par un réseau d'ordre ou au cours d'une transmission préliminaire, qui s'effectue avec des paramètres fixés par défaut.

Un module d'insertion de symboles d'analyse en émission facilite la synchronisation fréquentielle et temporelle du récepteur, et permet d'analyser les éventuels brouilleurs présents dans la bande de fréquences utilisée par lé système de transmission. On peut en particulier utiliser un symbole d'analyse nul, c'est-à-dire sans émission d'aucune porteuse, permettant l'écoute des brouilleurs par le récepteur en l'absence d'émission et, en conséquence, la détermination des porteuses qui sont le plus perturbées. Dans le cas fréquent où le décodage s'effectue par un algorithme à recherche du maximum de vraisemblance (algorithme de Viterbi), la détermination des porteuses les plus brouillées permet de leur affecter un taux de pondération moindre dans le treillis de décodage et donc d'atténuer l'effet du brouillage.

Par ailleurs, la prise en compte des symboles d'analyse en réception peut permettre de déterminer le choix optimum de paramètres à l'émission. Dans certains cas, il y aura renvoi de ces paramètres vers l'émetteur par une voie de retour, en vue d'un nouvel ajustement.

Dans la pratique, on insèrera en général en début de chaque trame de données émises un symbole dit nul, et un symbole dédié à la synchronisation du récepteur.

Un système comportant un émetteur et un récepteur du genre décrit ci-dessus peut assurer un débit supérieur au débit maximal autorisé par la norme DAB, tout en restant adapté à des conditions d'utilisation aussi bien fixes que mobiles, suivant le nombre de porteuses utilisé pour la transmission.

Ainis, la présente invention propose aussi un récepteur conforme à la revendication 6 et un système de transmission conforme à la revendication 8.

Les caractéristiques ci-dessus ainsi que d'autres apparaîtront mieux à la lecture de la description d'un mode particulier de réalisation qui suit, donné à titre d'exemple non limitatif.

La description se réfère aux dessins qui l'accompagnent, dans lesquels :
- la figure 1 est un schéma synoptique de l'émetteur d'un système suivant l'invention ;
- la figure 2 est un synoptique d'un récepteur ;
- la figure 3 est un schéma destiné à montrer un mode d'entrelacement temporel;
- la figure 4 est un schéma destiné à montrer le principe de la transmission d'un flux COFDM.

Le système présenté dans l'exemple utilise une bande passante légèrement inférieure à 8 MHz, et autorise alors un débit utile pouvant atteindre 12 Mbits/s en MDP4 par exemple, tout en restant adapté à des conditions de transmissions fixes ou mobiles. Des débits supérieurs peuvent être atteints en changeant le type de modulation (MDP8, MAQ16, MAQ64,...) et/ou en augmentant la bande passante utilisée.

La transformation temps/fréquence utilisée est de type transformation de Fourier. Le signal créé est alors qualifié de COFDM (Coded Orthogonal Frequency Division Multiplex) : les porteuses émises sont orthogonales et modulées par une séquence de bits codés.

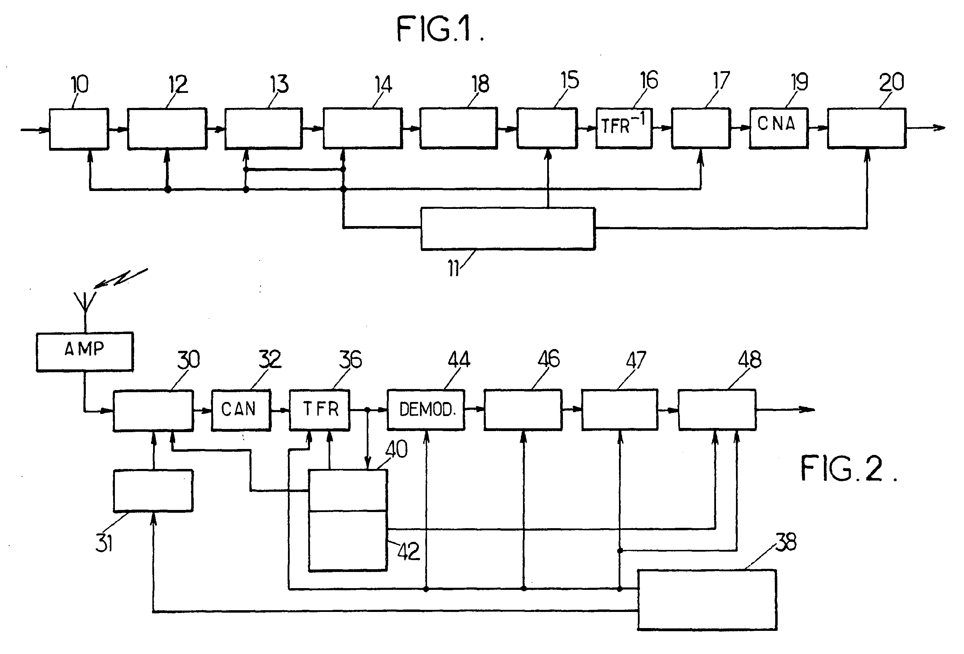

L'émetteur dont la constitution de principe est montré en figure 1 comporte un codeur 10 qui reçoit en entrée un débit binaire constant, qui est par exemple constitué par des trames MPEG 2 ayant la constitution définie dans la norme DVB ASI. Le codeur, qui peut avoir une constitution de type connu, réalise deux codages concaténés, séparés par un entrelacement au niveau bit. De préférence, on utilise en cascade un codage par bloc de Reed Solomon avec un premier rendement R1, puis un entrelacement-bit, et enfin un codage convolutif de rendement R2.

Le rendement du codage par bloc peut être déterminé une fois pour toutes, par exemple avec un rendement 188/204, comme dans le cas des normes DVB-C, DVB-S et DVB-T. En revanche, le codage convolutif aura un rendement paramétable, permettant de choisir plusieurs valeurs à l'aide d'une interface 11. Ce rendement peut notamment avoir l'une des valeurs suivantes : ½, 2/3, ¾, 5/6, 7/8. Le choix de ce rendement est un des éléments qui permettent d'établir un compromis entre la robustesse du système aux perturbations du canal de transmission et le débit autorisé, à bande passante fixée.

Le codeur peut être prévu pour recevoir également, au lieu d'un flot asynchrone MPEG 2, un flux de données binaires quelconques accompagné d'un signal d'horloge associé.

Le module 12 est destiné à préparer la constitution du flux COFDM. Il réalise une mise en trame du flux binaire issu du codeur 10. Cette mise en trame définit le nombre Ns de symboles COFDM utiles compris dans chaque trame émise, le nombre de porteuses Np qui sera utilisé pour émettre chaque symbole COFDM, et le nombre de bits M portés par chaque porteuse à un instant donné. Chaque trame comporte donc NsxNpxM bits. Ces trames prévoient l'insertion ultérieure de symboles d'analyse. Leur taille est donc prévue de façon à ce que des analyses régulières et suffisamment fréquentes puissent être effectuées à chaque nouvelle trame en réception à partir de ces symboles. On peut prévoir par exemple des durées de trames de quelques dizaines de milisecondes.

Le nombre de porteuses Np est avantageusement paramétrable. Il peut prendre par exemple les valeurs 112, 224, 448, 896, ou 1792, indépendamment du débit utile transmis. Dans le cadre d'une réalisation utilisant 8MHz de bande passante, la possibilité d'utiliser un nombre de porteuses Np bien inférieur à 1704 (comme c'est le cas en DVB-T) autorise des fonctionnements avec des émetteurs et/ou récepteurs mobiles.

Un module 13 d'entrelacement temporel et un module 14 d'entrelacement fréquentiel sont placés en cascade et remanient le contenu des trames défini par le module 12, sans en modifier le format. Les entrelacements réalisés sont du même type que ceux utilisés en DAB. La présente invention permet par contre de paramétrer la profondeur N de l'entrelacement temporel par commande à partir de l'interface 11, afin de réduire si nécessaire le délai de transmission.

Dans un mode avantageux de réalisation, N, qui est également le nombre de branches dans le module d'entrelacement temporel, vaut 0, 2, 4, 8 ou 16. La profondeur zéro, c'est-à-dire sans entrelacement temporel, pourra être utilisée lorsque que le canal de transmission ne varie pas au cours du temps et que l'opérateur souhaite minimiser le délai de transmission.

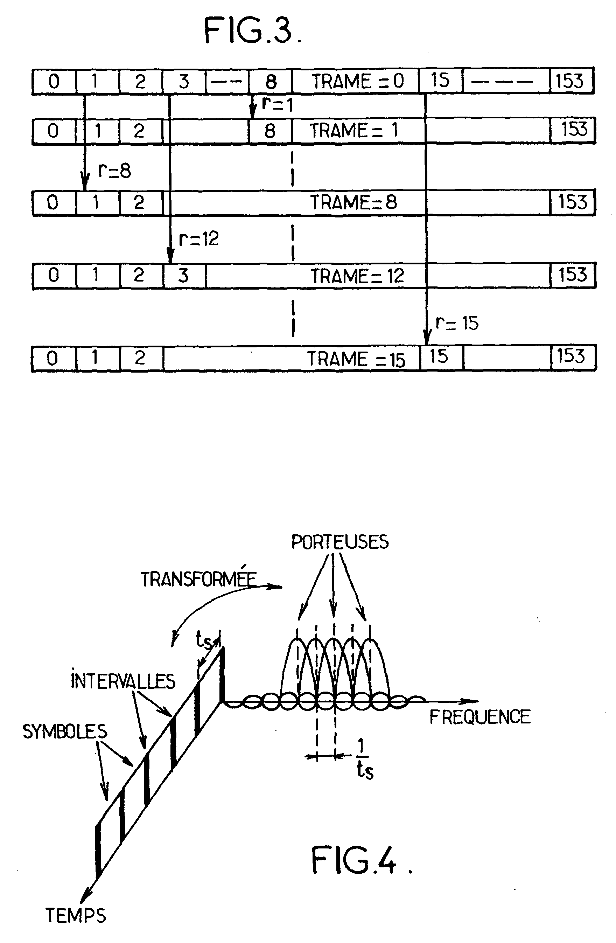

La figure 4 montre, à titre d'exemple, un entrelacement sur un cycle de N = 16 trames. Dans chaque trame, les bits sont affectés d'un retard égal à un nombre entier de trames et changent de trame sans changer de position dans la trame.

Le module 14 d'entrelacement fréquentiel travaille au niveau des bits de chaque symbole COFDM. L'algorithme de mélange des bits est du même type que celui réalisé en DAB, mais adapté au nombre de porteuses choisi.

Le module 18 permet d'insérer des symboles OFDM d'analyse au début de chaque trame. En général, on prévoira, dans chaque trame, un symbole OFDM nul et un symbole OFDM de synchronisation. Le symbole nul est caractérisé par une suppression de transmission pendant la durée d'un symbole COFDM (toutes les porteuses sont mises à zéro). Le symbole de synchronisation est un symbole particulier, mémorisé dans les récepteurs du système, qui permet d'analyser le canal de transmission et de synchroniser le récepteur en temps et en fréquence.

Le modulateur 15 utilise pour chaque porteuse une modulation de phase différentielle. Elle transforme le flux de bits en un flux représentant des symboles complexes codés différentiellement. On utilisera en général une modulation à quatre états ou à huit états, dites DQPSK (ou MDP4) et D8PSK (MDP8). Le modulateur peut être prévu pour utiliser l'une ou l'autre de ces deux modulations, sous la commande de l'interface 11.

Le module 16, qui réalise une transformée de Fourier rapide inverse TFR⁻¹, transforme le flux de symboles COFDM complexes définis dans le domaine fréquentiel en un signal COFDM temporel. Le traitement est effectué par blocs de Nfft points, où Np porteuses sont traitées à chaque fois, les Nfft-Np points restant étant fixés à zéro.

La taille Nfft de la transformation de Fourier dépend du nombre de porteuses utilisées. On peut notamment utiliser la correspondance suivante :

| | |
|---|---|
| nombre de porteuses | 112, 224, 448, 896, 1792 |
| taille | 128, 256, 512, 1024, 2048 |

La taille est la puissance de 2 immédiatement supérieure au nombre de porteuses. Elle sera directement commandée par le nombre de porteuses utilisées Np, nombre qui est paramétrable dans un mode avantageux de réalisation.

Le module 17 est destiné à insérer un intervalle de garde entre les symboles COFDM successifs, afin de réduire l'effet des multi-trajets en créant devant chaque symbole une zone tampon qui absorbe les échos et réduit le risque d'interférences entre symboles. Le choix de l'intervalle de garde résulte d'un compromis. Plus il est long et plus la transmission peut tolérer des retards d'écho importants. Mais l'ajout d'un intervalle de garde à la durée d'un symbole utile diminue le débit disponible. Le module permet avantageusement de paramétrer l'intervalle de garde à partir de l'interface 11. On peut par exemple prévoir des intervalles possibles de longueur égale à ¼, 1/8, 1/16 ou 1/32 de la durée d'un symbole COFDM.

Le convertisseur numérique-analogique 19 transforme le flux COFDM en un signal analogique qui présente l'intérêt d'occuper une bande spectrale à fronts raides. Un signal véhiculant des données à 12 Mbits/s peut ainsi présenter une largeur de bande inférieure à 8 MHz.

On arrive ainsi à un signal du genre schématisé sur la figure 4. Dans le domaine fréquentiel, les porteuses sont orthogonales (espacées d'un intervalle fréquentiel égal à l'inverse du temps utile ts d'un symbole COFDM). Dans le domaine temporel, chaque porteuse est modulée en MDP4 ou MDP8 par des symboles de durée utile ts. Cette durée ts est prolongée par un intervalle de garde paramétrable tg afin d'absorber les échos de transmission possibles. Le passage entre le domaine fréquentiel et temporel se fait en émission au moyen d'une transformée de Fourier rapide inverse. Ce passage se fait en sens inverse en réception, à l'aide d'une transformée de Fourier rapide.

Enfin, le module de transposition radio-fréquence 20 permet d'arriver à la fréquence de la porteuse de transmission, en général de quelques GHz. Souvent, il sera nécessaire d'effectuer plusieurs mélanges successifs pour atteindre une fréquence finale de travail située au-delà de 1GHz. Cette fréquence sera généralement programmable par l'utilisateur, de façon indépendante des autres paramètres.

L'interface de paramétrage 11, déjà mentionnée, permet à l'utilisateur de sélectionner un mode de fonctionnement de l'émetteur parmi plusieurs. Les différents modes sont prédéfinis et correspondent à des combinaisons optimisées en fonction des facteurs de perturbation ou des exigences en débit dans les conditions particulières d'emploi. On peut en particulier prévoir quelques jeux de paramètres correspondant aux cas les plus courants et des jeux supplémentaires correspondant à des conditions particulièrement dures en matière :
- d'affaiblissement et d'écho,
- d'affaiblissement et de vitesse du véhicule portant l'émetteur ou le récepteur,
- de résistance à l'affaiblissement, tout en conservant un débit élevé,
- de débit, qui doit être maximum (moyennant une résistance à l'affaiblissement réduite).

A titre d'exemple, on peut prévoir en tant que modes de base, les valeurs suivantes des paramètres :

| **Conditions ou contraintes de réception** | **Rendement Codage convolution nel** | **Profondeur d'entrelace ment temporel** | **Type de modulation** | **Nombre de porteuses** | **Intervalle de garde** |
|---|---|---|---|---|---|
| signal faible, présence de brouilleurs | ½ pour augmenter la robustesse | maximum (16 dans l'exemple) | MDP4 pour augmenter la robustesse | variable suivant les échos et la vitesse de variation du canal | variable suivant les échos de transmission |
| échos longs dans un canal fluctuant lentement | variable suivant les niveaux du signal et du brouillage | maximum (16 dans l'exemple) | MDP4 ou MDP8 suivant les niveaux du signal et du brouillage | grand | grand |
| canal fluctuant rapidement | variable suivant les niveaux du signal et du brouillage | maximum (16 dans l'exemple) | MDP4 pour augmenter la robustesse | faible | variable suivant les échos de transmission |
| débit de données important | 7/8 pour augmenter le débit | maximum (16 dans l'exemple) | MDP8 pour augmenter le débit | variable suivant les échos et la vitesse de variation du canal | variable suivant les échos de transmission |
| faible délai de transmission | variable suivant les niveaux du signal et du brouillage | faible, ou nul | DQPSK | variable suivant les échos et la vitesse de variation du canal | variable suivant les échos de transmission |

Le terme « variable » dans le tableau signifie que le paramètre correspondant doit être fixé à l'une des valeurs possibles, en cohérence avec un mode de fonctionnement défini.

Par exemple, un mode défini comme étant résistant à des échos de 5µs devra présenter un intervalle de garde d'au moins 5µs. Avec la configuration décrite plus haut, cela peut correspondre par exemple à un mode de 896 porteuses et un intervalle de garde ¼.

La plupart des modules du récepteur effectuent des opérations inverses de celles des modules correspondants de l'émetteur.

Le module 30 de transposition vers la basse fréquence convertit le signal hyperfréquence d'entrée jusqu'à une fréquence centrale finale permettant sa numérisation. Pour cela, il utilise un générateur local 31 fournissant plusieurs fréquences ajustables.

Le module 32 transforme le flux analogique en signal numérique.

Le module 36 de transformation de Fourier rapide transforme le signal COFDM temporel en un flux de symboles complexes dans le domaine fréquentiel. La transformée de Fourier mise en oeuvre dépend du nombre de porteuses utilisées, paramétrable à partir de l'interface d'utilisateur 38. Cette transformation de Fourier ne porte que sur la partie utile des symboles COFDM, l'intervalle de garde n'étant pas traité.

Un module de synchronisation 40, qui n'a pas de contrepartie directe dans l'émetteur, utilise le symbole de synchronisation pour positionner la fenêtre de transformation de Fourier sur la partie utile des symboles COFDM, en écartant les intervalles de garde. De plus, l'analyse par le module 40 permet de corriger l'écart de fréquence qui peut exister entre l'émetteur et le récepteur, en commandant le dernier étage de la transposition en basse fréquence.

Un module 42 d'estimation des brouilleurs permet de déterminer leur puissance sur chaque fréquence utilisée. La mesure est effectuée une fois par trame pendant la durée du symbole nul. La puissance des brouilleurs est mémorisée pour fournir un indice de la fiabilité qui s'attache à chacune des porteuses, donc aux symboles transportés par celles-ci. Ces indices sont utilisés pour le décodage final de Viterbi.

Le module de démodulation 44 effectue l'opération duale du module de modulation 15. Il transforme le flux de symboles complexes en un flux de bits qui sont pondérés suivant le niveau de puissance de chaque porteuse à la réception. Ainsi, le récepteur peut tenir compte des caractéristiques du canal, qui renforce certaines porteuses et en atténue d'autres.

Les modules 46 de désentrelacement fréquentiel et 47 de désentrelacement temporel effectuent les opérations duales de celles des modules 13 et 14 de l'émetteur.

Le module de décodage 48 est prévu pour tenir compte du caractère concaténé des deux codages à l'émission. Il effectue un décodage du code convolutif, un désentrelacement-bit, et enfin un décodage du code en blocs. Le décodage du code convolutif se fera en général par un décodage de Viterbi en décision douce. Afin de déterminer le maximum de vraisemblance, il tient compte de l'estimation qui est faite du niveau de brouillage sur les différentes porteuses ainsi que de l'atténuation de ces porteuses, pour réduire l'influence des porteuses dégradées. Cette opération est réalisée en affectant aux bits un indice de pondération qui dépend de ces deux facteurs.

Le module de paramétrage 38 est prévu pour sélectionner des jeux de paramètres qui sont les mêmes que ceux prévus au niveau de l'émission. En général, le jeu de paramètres utilisé à l'émission sera communiqué au récepteur par un réseau d'ordre. Le choix du jeu de paramètres sera souvent fait à partir d'une connaissance a priori du canal. Cependant, s'il existe une voie de retour, une procédure préalable de sélection, consistant à effectuer plusieurs essais avec des jeux de paramètres différents, peut être prévue.

## Revendications

1. Emetteur pour un système de transmission radiofréquence, cet émetteur comprenant :
- un codeur (10) fournissant, à partir de données d'entrée, un flux numérique dont le contenu résulte d'un codage de correction d'erreurs,
- un module (12) de répartition des bits sur plusieurs porteuses, dont le nombre est sélectionnable, appartenant à un groupe de porteuses régulièrement réparties dans un canal, destiné à constituer un multiplex à répartition de fréquences,
- un module (13) d'entrelacement temporel conforme à une répartition donnée par le module de répartition,
- un module (14) d'entrelacement fréquentiel entre les porteuses définies par le module de répartition,
- un modulateur de phase ou éventuellement de phase et d'amplitude (15),
- un module de transformation fréquence-temps (16),
- un module (17) d'insertion éventuelle d'intervalles de garde augmentant la période temporelle des symboles, et
**caractérisé en ce qu'**il comprend en outre :
- une interface (11) permettant de sélectionner un jeu de paramètres de fonctionnement prédéfini correspondant au mieux aux conditions de propagation et au type de brouillage anticipé, chaque jeu de paramètres étant défini par une combinaison particulière des paramètres constitués par le rendement de codage, la profondeur d'entrelacement temporel, le nombre de porteuses, leur type de modulation, et la longueur des intervalles de garde éventuels.

2. Emetteur suivant la revendication 1, **caractérisé en ce que** chaque jeu de paramètres fait intervenir des valeurs différentes de tous les paramètres.

3. Emetteur suivant la revendication 1 ou 2, **caractérisé en ce que** l'émetteur comporte un module (18) d'insertion de symboles d'analyse, tels que des symboles nuls et/ou des symboles de synchronisation.

4. Emetteur suivant l'une quelconque des revendications précédentes, **caractérisé en ce que** la modulation est une modulation différentielle à quatre ou huit états.

5. Emetteur selon l'une quelconque des revendications précédentes, **caractérisé en ce que** la transformation fréquence-temps est une transformée de Fourier rapide inverse TFR⁻¹, composant ainsi un signal COFDM.

6. Récepteur pour un système de transmission radiofréquence, ce récepteur comprenant :
- un module (40) de synchronisation temporelle et fréquentielle,
- un module (36) de transformation temps-fréquence et de suppression des éventuels intervalles de garde,
- un démodulateur de phase ou éventuellement de phase et d'amplitude (44),
- un module de désentrelacement fréquentiel (46),
- un module de désentrelacement temporel (47),
- un décodeur (48) effectuant successivement un décodage de Viterbi, un désentrelacement-bit, et un décodage de Reed Solomon, et
**caractérisé en ce qu'**il comprend en outre :
- une interface (38) permettant de sélectionner un jeu de paramètres de fonctionnement prédéfini correspondant à ceux du flux transmis, lesquels sont définis par une combinaison particulière des paramètres constitués par le rendement de codage, la profondeur d'entrelacement temporel, le nombre de porteuses, leur type de modulation, et la longueur des intervalles de garde éventuels.

7. Récepteur selon la revendication 6, **caractérisé en ce qu'**il comporte des moyens (42) pour déterminer les porteuses les plus brouillées par écoute pendant des périodes d'émission de symboles nuls et pour leur affecter un taux de pondération moindre dans un décodage à décision douce.

8. Système de transmission vers ou à partir de mobile autorisant des débits utiles supérieurs à ce que permettent les systèmes conformes à la norme DAB, comportant un émetteur suivant l'une quelconque des revendications 1 à 5, et un récepteur suivant la revendication 6.

## Claims

1. Transmitter for a radiofrequency transmission system, this transmitter comprising:
- an encoder (10) for supplying, from input data, a digital stream, the content of which results from an error correction coding,
- a module (12) for the distribution of bits over a plurality of carriers, the number of which is selectable, belonging to a group of carriers uniformly distributed over a channel, which module is intended to form a frequency division multiplex,
- a module (13) for time interleaving in accordance with a given distribution by the distribution module,
- a module (14) for frequency interleaving between the carriers defined by the distribution module,
- a phase, or optionally phase and amplitude, modulator (15)
- a frequency/time transformation module (16), and
- a module (17) for the optional insertion of guard times increasing the time period of the symbols,
**characterised in that** it additionally comprises:
- an interface (11) allowing selection of a predefined set of operating parameters corresponding at best to the propagation conditions and to the type of interference expected, each set of parameters being defined by a particular combination of the parameters formed by the encoding yield, the time interleaving depth, the number of carriers, the type of modulation thereof, and the lengths of any guard times.

2. Transmitter according to claim 1, **characterised in that** each set of parameters uses different values for all of the parameters.

3. Transmitter according to either claim 1 or claim 2, **characterised in that** the transmitter comprises a module (18) for the insertion of analysis symbols, such as zero symbols and/or synchronisation symbols.

4. Transmitter according to any one of the preceding claims, **characterised in that** the modulation is a four or eight-state differential modulation.

5. Transmitter according to any one of the preceding claims, **characterised in that** the frequency/time transformation is an inverse fast Fourier transform FFT⁻¹, thus forming a COFDM.

6. Receiver for a radiofrequency transmission system, this system comprising:
- a time and frequency synchronising module (40),
- a module (36) for time/frequency transformation and for eliminating any guard times,
- a phase, or optionally phase and amplitude, demodulator (44)
- a frequency deinterleaving module (46),
- a time deinterleaving module (47), and
- a decoder (48) performing in succession Viterbi decoding, bit deinterleaving and Reed Solomon decoding,
**characterised in that** it additionally comprises:
- an interface (38) allowing selection of a predefined set of operating parameters corresponding to those of the transmitted stream, which are defined by a particular combination of the parameters formed by the encoding yield, the time interleaving depth, the number of carriers, the type of modulation thereof, and the length of any guard times.

7. Receiver according to claim 6, **characterised in that** it comprises means (42) for determining which carriers are subject to most interference, by listening during periods in which zero symbols are transmitted, and for allocating a lower weighting rate to said carriers in a soft decision decoding.

8. System for transmission to or from a mobile system allowing higher effective transfer rates than those facilitated by systems complying to the DAB standard, comprising a transmitter according to any one of claims 1 to 5 and a receiver according to claim 6.

## Patentansprüche

1. Sender für ein Radiofrequenz-Übertragungssystem mit
- einer Codiereinrichtung (10), die aus Input-Daten einen numerischen Fluss liefert, der von einer Codierung einer Fehlerkorrektur herrührt,
- einem Modul (12) zum Verteilen der Bits auf mehrere Trägerwellen, deren Anzahl wählbar ist und die zu einer Gruppe von Trägerwellen gehören, die regelmäßig in einem Kanal gesendet werden, der dazu bestimmt ist, einen Multiplex zum Senden von Frequenzen darzustellen,
- einem Modul (13) zur zeitlichen Bündelung gemäß einer von dem Sendemodul gelieferten Sendung,
- einem Modul (14) zur Frequenzbündelung zwischen den vom Sendemodul definierten Trägerwellen,
- einem Phasenmodulator oder möglichenfalls einem Phasen- und Amplituden-Modulator (15)
- einem Modul zur Frequenz-Zeit-Transformation (16)
- einem Modul (17) zum möglichen Zwischenschalten von Überwachungsintervallen, welche den Zeitabstand der Zeichen vergrößern,
und welcher **dadurch gekennzeichnet ist, dass** er darüber hinaus
- eine Schnittstelle (11) umfasst, mit welcher sich ein Satz von Betriebsparametern auswählen lässt, der vorher so festgesetzt worden ist, dass er sehr gut den Bedingungen der Fortpflanzung und dem vorbekannten Störungstyp entspricht, wobei jeder Satz von Parametern über eine besondere Kombination der Parameter definiert wird, welche sich aus dem Wirkungsgrad der Codierung, der Tiefe der zeitlichen Bündelung, der Anzahl der Trägerwellen, ihrem Modulationstyp und der Dauer der möglichen Überwachungsintervalle zusammensetzen.

2. Sender nach Anspruch 1, **dadurch gekennzeichnet, dass** in jedem Satz von Parametern unterschiedliche Werte von allen Parametern berücksichtigt werden.

3. Sender nach Anspruch 1 oder 2, **dadurch gekennzeichnet, dass** der Sender ein Modul (18) zum Zwischenschalten von Zeichen für die Analyse umfasst, wie Null-Zeichen und/oder Zeichen für die Synchronisation.

4. Sender nach einem der vorhergehenden Ansprüche, **dadurch gekennzeichnet, dass** die Modulation eine Konsekutivmodulation mit vier oder acht Zuständen ist.

5. Sender nach einem der vorhergehenden Ansprüche, **dadurch gekennzeichnet, dass** die Frequenz-Zeit-Transformation eine schnelle Fourier-Rücktransformation TFR⁻¹ ist, welche somit ein codiertes OFDM-Signal darstellt.

6. Empfänger für ein Radiofrequenz-Übertragungssystem mit
- einem Modul (40) für die Zeit- und Frequenz-Synchronisierung,
- einem Modul (36) für die Zeit-Frequenz-Transformation und die Unterdrückung der möglichen Überwachungsintervalle,
- einem Phasendemodulator oder möglichenfalls einem Phasen- und Amplitudendemodulator (44),
- einem Modul zur Frequenzentbündelung (46),
- einem Modul zur zeitlichen Entbündelung (47),
- einem Decodierer (48), der nacheinander eine Viterbi-Decodierung, eine Bit-Decodierung und eine Reed-Solomon-Decodierung durchführt,
und welcher **dadurch gekennzeichnet ist, dass** er darüber hinaus
- eine Schnittstelle (38) enthält, mit welcher sich ein vorher erstellter Satz von Betriebsparametern auswählen lässt, welche denen des übermittelten Flusses entsprechen,
wobei die Betriebsparameter über eine besondere Kombination der Parameter definiert sind, welche sich aus dem Wirkungsgrad der Codierung, der Tiefe der zeitlichen Bündelung, der Anzahl der Trägerwellen, ihrem Modulationstyp und der Dauer der möglichen Überwachungsintervalle zusammensetzen.

7. Empfänger nach Anspruch 6, **dadurch gekennzeichnet, dass** er Mittel (42) umfasst, um während der Emissionszeiten von Null-Zeichen durch Abhören die am meisten gestörten Trägerwellen zu ermitteln und um ihnen bei einer Decodierung zu einer Binärfolge eine geringere Wichtung zu verleihen

8. Übertragungssystem zu oder von einem beweglichen Körper, das Nutzleistungen gestattet, die denen überlegen sind, die mit Systemen nach der Norm DAB erzielt werden können, mit einem Sender nach einem der Ansprüche 1 bis 5 und einem Empfänger nach Anspruch 6.
